Europäisches Patentamt

European Patent Office

Office européen des brevets

(11) Publication number: **0 220 349**
**A1**

## (12) EUROPEAN PATENT APPLICATION

(21) Application number: **85307597.6**

(22) Date of filing: **22.10.85**

(51) Int. Cl.⁴: **C10G 11/18 , B01J 8/24**

(43) Date of publication of application:
**06.05.87 Bulletin 87/19**

(84) Designated Contracting States:
**DE FR GB IT NL**

(71) Applicant: **TEXACO DEVELOPMENT CORPORATION**
**2000 Westchester Avenue**
**White Plains New York 10650(US)**

(72) Inventor: **Niccum, Phillip Kent**
**2238 Millhouse Road**
**Houston Texas 77073(US)**

(74) Representative: **Ben-Nathan, Laurence Albert et al**
**c/o MICHAEL BURNSIDE & PARTNERS 2**
**Serjeants' Inn Fleet Street**
**London EC4Y 1HL(GB)**

(54) Fluid catalytic cracking feed injection nozzle.

(57) A method for protecting an exposed vane of a feed atomization nozzle in a fluid catalytic cracking process, comprising forming a vane as a helix to produce a feed spray pattern included angle of 60° with a specified steam to oil ratio and bulk average feed velocity.

*FIG.5.*

# 0 220 349

## FLUID CATALYTIC CRACKING FEED INJECTION NOZZLE

This invention relates to a method of protecting a feed injection nozzle in a fluid catalytic cracking process from erosion.

Fluid catalytic cracking processes are well known in the art. In the catalytic cracking process, liquid hydrocarbons such as vacuum gas oil, atmospheric residuum, deasphalted oil and combinations thereof are contacted with active cracking catalysts such as a crystalline alumina silicate at temperatures of from about 454°C (850°F) to about 566°C (1050°F) for a period of time in the order of 10 seconds or less to give a desired conversion. The process can utilize catalyst as a pellet in a moving bed, or powdered or microspherical catalyst using fluidized solid techniques. These cracking catalysts can consist of many types, however one group referred to as zeolite catalysts, are well known and commercially available. Higher boiling hydrocarbons such as vacuum gas oil are cracked using zeolite catalyst to produce lower boiling hydrocarbons with the relative product mix, including $C_4$ olefins and gasoline as well as the amount of carbonaceous matter deposited on catalyst, being determined by catalyst contact time, reactor conditions and feedstock composition.

It has been found that the liquid feed vaporization rate appears to be the most important, potentially limiting, physical factor in a fluidized catalytic cracking reactor. Optimum performance would be realized with an all vapor feed since the most desirable reactions occur in the vapor phase and require extremely rapid movement of reactants to and from active catalytic sites. However, preheating of the feedstock to completely vaporize the stock prior to injection into the reactor adversely affects process economics. When a substantially liquid feedstock is employed, the time required for vaporization of the feed droplets reduces the time available for the desired catalytic reactions thus tending to reduce feed conversion per pass with a consequent adverse affect on yield. Further, liquid wetting of the catalyst reduces the surface area which is available to catalyze hydrocarbon reactions and results in increased coke formation due to adsorption of the heavy fractions present in the feed or formed by polymerization. Consequently, the process duties of the stripper and regenerator are increased. Liquid droplets and wet catalyst can also deposit as coke on walls of the reactor and on the reactor grid (as for example in a dense bed unit).

Thus, it has been found that the nature of the feed injection in the catalytic cracking reactor is critical. The injection must provide uniform distribution of the feedstock over the cross section of the reaction zone to enable optimum contacting of the oil and catalyst. In addition, essentially complete atomization of any unvaporized feed must be effected as fast and as close to the injection zone as possible.

Proper feed injection is less critical in a dense bed unit than in a transfer line reactor. In a dense bed unit, initial contact between oil and catalyst must be sufficient to generate a large volume of vapor by vaporization and cracking and to avoid forming large slugs of oil-wet catalyst. However, most of the cracking can occur in the dense bed where the contact time can be varied by changing the catalyst hold-up. Moreover, the reactor grid, if properly designed, provides good distribution and promotes good contacting. In a transfer-line reactor, however, the feed injection zone must provide both good contacting and a high degree of atomization. All conversion must be attained within the transfer-line reactor. The assistance provided by the grid in a dense bed unit is not available. Desirable cracking will not begin until the oil has been vaporized and well distributed. In a transfer line reactor, however, the total oil residence time is only on the order of about 1-7 seconds. Thus, the amount of time taken to achieve vaporization is critical. The more time taken for vaporization, the less time available for conversion.

It has been found to be extremely beneficial to vaporize all feed almost completely in about one second or less by atomizing the liquid into droplets about 350 microns in diameter. With such a fine dispersion, the liquid does not have to come in direct contact with the solids for rapid vaporization. Heat flows rapidly by radiation and thermal conduction through vapor from the hot solids and evaporates the liquid droplets without direct contact with the catalyst.

To vaporize all feed, within these constraints, various atomization nozzles have been used. The nozzle described in U.S. Patent No. 2,747,936 is typical of those nozzles and has been used in the industry. This nozzle consists of an atomization vane protected from catalyst erosion by containing the vane in a housing. This nozzle produces complete atomization of desired droplet size.

This nozzle works well, but with increased feed rates, larger nozzles are necessary. Required nozzle size has increased to a point where the nozzles can no longer practically fit in the reaction zone due to the size of the housing protecting the vane. U. S. Patent No. 4,427,537 describes a feed injection method wherein the nozzle atomization vane is external to the reaction zone.

To solve the problem of space, techniques have been developed for injecting feed without use of any nozzle at all. For example, U.S. Patent No. 3,654,140 describes atomization of oil with the injection of high

2

velocity steam alone. This approach has been utilized with success, but suffers from a lack of control of droplet size and distribution as well as causing a large steam consumption and high discharge velocity. This high velocity may cause erosion of equipment and catalyst attrition.

There exists a need in the art for a method to atomize feed in the reaction zone of a fluid catalytic cracking process with a controlled droplet size and distribution as well as a relatively low discharge velocity, below 61 m/sec (200 ft./sec). Due to spacing limitations, this must be accomplished without the bulky vane housings or other apparatus for protecting the vane from catalyst caught in vortices which rapidly erode all heretofore known apparatuses. An object of the invention is to provide a method of achieving an improvement in feedstock atomization.

The present invention provides a method for protecting from erosion an exposed atomization vane of an oil/steam feed injection nozzle, said vane exposed to a fluidized catalyst in the reaction zone of a fluidized catalytic cracking process, said method comprising:

a. forming the vane in an axially tapered helix with an inner longitudinal surface, an upper radially extending helical surface, a lower radially extending helical surface and an outer surface;

i. said inner longitudinal surface at an angle to the axis and tapering inward to form a tapered bore inside of said vane;

ii. said upper radially extending helical surface spaced to form in conjunction with the lower radially extending helical surface a helical slot for discharging said oil/steam feed and forming with said longitudinal surface a helical edge of progressively reduced diameter to position a portion of said upper surface radially inward from the axially preceding curved wall to peel a portion of the oil/steam feed and discharge the feed through the slot to said reaction zone;

iii. said lower radially extending helical surface formed to produce said slot substantially uniform in cross section along its length;

iv. said outer edge having a radius less than the corresponding portion of the preceding turn so that the feed discharged from the nozzle has a major portion of the spray with an included angle of forty-five to ninety degrees, preferably about sixty degrees;

b. positioning the vane in the reaction zone;

c. discharging the oil/steam feed in a steam to oil volume ratio of 0 to 15 preferably 1 to 4 and velocity of 1 to 29 m/sec. (3.4 to 95 ft./sec.) preferably 3 to 8.5 m/sec. (10 to 28 ft./sec.) thereby sweeping the upper radially extending helical surface free of erosive matter and creating a pressure profile across the slot such that the pressure of the lower radially extending surface is higher than that of upper radially extending helical surface to form a relatively stagnant layer such that erosive matter such as catalyst from the reaction zone carried in feed vortices does not impinge upon the lower radially extending surface.

The invention also provides a fluid catalytic cracking process wherein an oil/steam feed is injected into a fluidized catalyst in a reaction zone of a transfer line reactor wherein injection is by means of injection nozzle comprising an atomization vane protected from catalyst erosion by containing the vane in a housing; the process comprising:

1. positioning the nozzle comprising an unhoused atomization vane exposed to the fluidized catalyst in the reaction zone;

2. forming the vane; and discharging steam/oil feed from the vane to protect the exposed vane from catalyst erosion;

a. the vane formed in an axially tapered helix with an inner longitudinal surface, an upper radially extending helical surface, a lower radially extending helical surface and an outer surface;

i. said inner longitudinal surface at an angle to the axis and tapering inward to form a tapered bore inside of said vane,

ii. said upper radially extending helical surface spaced to form in conjunction with the lower radially extending helical surface a helical slot for discharging said oil/steam feed and forming with said longitudinal surface a helical edge of progressively reduced diameter to position a portion of said upper surface inward from the axially preceding curved wall to peel a portion of the oil/steam feed and discharge the feed through the slot to said reaction zone;

iii. said lower radially extending helical surface formed to produce said slot substantially uniform in cross section through its length;

iv. said outer edge having a radius less than the corresponding portion of the preceding turn so that the feed discharged from the nozzle has a major portion of the spray with an included angle of forty-five to ninety degrees;

b. the oil/steam feed discharged in a steam to oil volume ratio of 0 to 15 and velocity of 1.29 m/sec. (3.4 to 95 ft/sec.) thereby sweeping the upper radially extending helical surface free of erosive matter and creating a pressure profile across the slot such that the pressure of the lower radially extending surface is higher than that of upper radially extending helical surface to form a relatively stagnant layer such that erosive matter such as catalyst from the reaction zone carried in feed vortices does not impinge upon the lower radially extending surface.

The invention further provides a catalytic cracking process wherein an oil/steam feed is injected into a fluidized catalyst in a reaction zone of a transfer line reactor wherein injection is by means of one or more injectors, the injectors selected from the group consisting of injectors with nozzles and injectors without nozzles, the injectors with nozzles distinguished by producing complete atomization of desired droplet size; the nozzles comprising an atomization vane protected from catalyst erosion by a housing, nozzle size and therefore injector capacity constrained by the housing; the process comprising:

1. positioning the nozzle comprising an unhoused atomization vane exposed to the fluidized catalyst in the reaction zone;

2. forming the vane; and discharging steam/oil feed from the vane so as to protect the exposed vane from catalyst erosion;

a. the vane formed in an axially tapered helix with an inner longitudinal surface, an upper radially extending helical surface, a lower radially extending helical surface and an outer surface;

i. said inner longitudinal surface at an angle to the axis and tapering inward to form a tapered bore inside of said vane,

ii. said upper radially extending helical surface spaced to form in conjunction with the lower radially extending helical surface a helical slot for discharging said oil/steam feed and forming with said longitudinal surface a helical edge of progressively reduced diameter to position a portion of said upper surface radially inward from the axially preceding curved wall to peel a portion of the oil/steam feed and discharge the feed through the slot to said reaction zone;

iii. said lower radially extending helical surface formed to produce said slot substantially uniform in cross section along its length;

iv. said outer edge having a radius less than the corresponding portion of the preceding turn so that the feed discharged from the nozzle has a major portion of the spray with an included angle of forty-five to ninety degrees;

b. the oil/steam feed discharged from the vane in a steam to oil volume ratio of 0 to 15 and velocity of 1 to 29 m/sec. (3.4 to 95 ft/sec.) thereby sweeping the upper radially extending helical surface free of erosive matter and creating a pressure profile across the slot such that the pressure of the lower radially extending surface is higher than that of upper radially extending helical surface to form a relatively stagnant layer such that the erosive matter such as catalyst from the reaction zone carried in feed vortices does not impinge upon the lower radially extending surface thereby eliminating the housing and associated capacity constraint while producing complete atomization of desired droplet size.

In one embodiment the inner longitudinal surface is longitudinally curved and the tapered bore is curved. In another embodiment the inner longitudinal surface is longitudinally straight and the tapered bore defines a right circular cone.

In the drawings:-

Figure 1 is a side view of the vane;

Figure 2 is another side view of the vane at ninety degrees to the side view of Figure 1;

Figure 3 is a sectional view of the fitting and vane taken along line 3-3 of Figure 4;

Figure 4 is an axial interior end view of the vane;

Figure 5 is a cross section view of a slot of the vane;

Figure 6 is a schematic view of the vane in the reaction zone of a fluid catalytic cracking process.

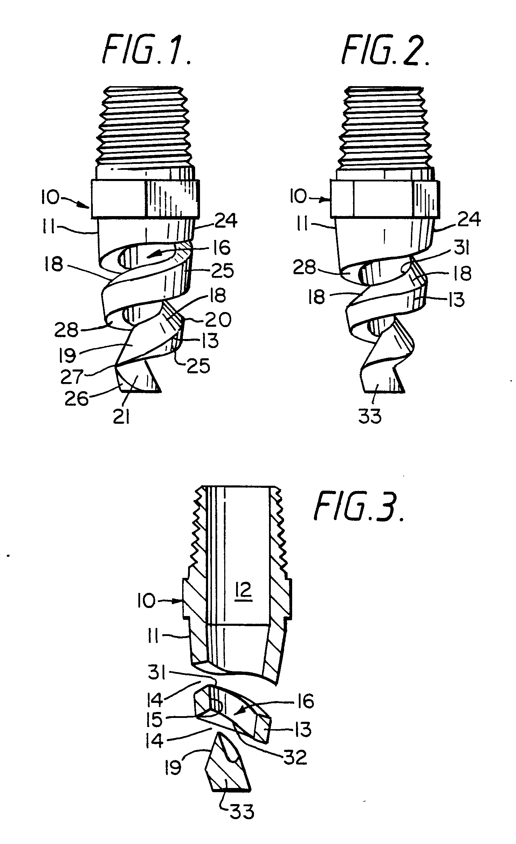

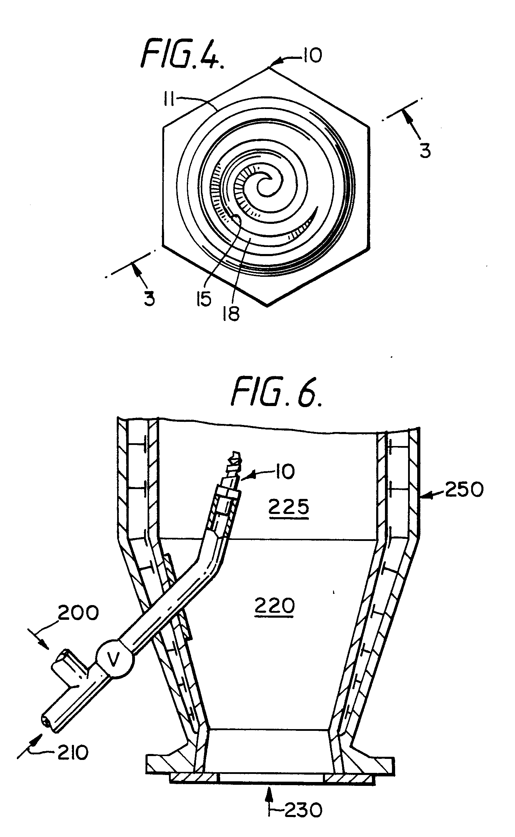

Figures 1, 2, 3 and 4, along with the description, are taken substantially from U.S. Patent No. 2,804,341 which is incorporated herein in its entirety by reference.

In Figures 1-4 a nozzle 10 comprises a tubular portion 11 forming a passage 12 and a helical-shaped vane 13 extending axially from the tubular portion 11. The vane 13 forms a helical slot 14 and has an inner wall 15 defining a bore 16 for delivering feed form the passage 12 throughout the vane for through the slot 14. The vane spirals inwardly and the inner wall 15 has an inward axial taper to form the bore 16 in either a conical or bullet shape so that the cross section of the bore is reduced in the direction of flow through the nozzle. When the inner wall surface (inner longitudinal surface) is longitudinally curved, the bore is bullet shaped. When the inner wall surface (inner longitudinal surface) is longitudinally straight, the bore is conical in shape.

The vane 13 has an upper radially extending helical surface 18 extending at an angle to the axis of the nozzle radially outwardly from the bore 16. The surface 13 extends from the tubular portion 11 to the surface 19 forming an edge 20 therewith. The surface 19 has a helical shape and extends outwardly at a greater angle to the axis than the surface 18. The surface 19 extends from the surface 18 to the end surface 21 at the tip of the nozzle. The nozzle has cylindrical exterior surface 24 and an outer helical surface 25 forming the exterior surface around the outside of the vane 13 and tapered axially inward to form the nozzle in an outer cone shape. The surface 25 terminates at the surface 19. In the specimens produced, this termination has been ground to produce a smooth transition. The tip of the nozzle has a surface 26 in the same conical plane as the surface 25 and forms with the surface 19 an exterior edge 27.

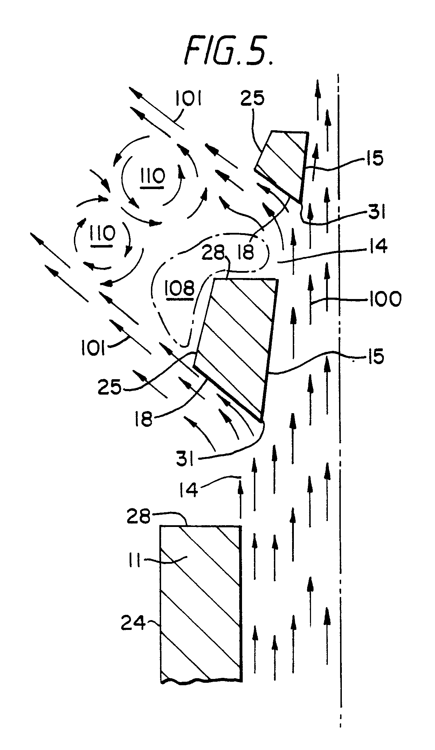

On the under side of the vane 13 there is a lower radially extending helical surface 28 forming an upper wall of the slot 14. The slot 14 between the surfaces 18 and 28 remains substantially uniform in cross section up to the line 20. The cross section of this passage is illustrated in Figure 5. The surface 19 may be at a greater angle to the radial plane than surface 18 to provide a full cone spray. It may be at the same angle.

The surface 18 forms with the inner wall 15 an inner helical edge 31. The pitch of the edge 31 remains substantially uniform throughout the nozzle and spirals inward with the taper of the inner wall 15. The inner wall 15 forms an edge 32 with the surface 28. With the increase in pitch of the surface 19, the pitch of the edge 32 correspondingly increases so that the width of the wall 15 is axially reduced as it extends axially towards the end of the nozzle.

In viewing the nozzle axially through the passage 12, the inner wall 15 spirals forwardly with the wall at an angle so that the inner wall has a component facing the feed stream entering the nozzle. The surface 18 spirals inwardly so that in extending axially towards the end of the nozzle, an increasing area of the surface 18 projects radially inward from the axially preceding wall portion. The surface 19 similarly projects inwardly from the axially preceding wall portion. The inner edge 31 terminates at an end portion 33 to form a plug at the end of the nozzle so that the fluid at the end of the nozzle is discharged over the surface 21. The liquid entering the nozzle first engages the upper portion of the edge 31 which extends radially inwardly of the cylindrical wall because of the taper of the inner wall 15. This taper is preferably curved, but may be straight. The tapering of the inner wall 15 and the tapering of the spiral of the surfaces 18, 19 present a continuous deflecting surface in the path of the liquid to peel off a sheet of the feed The reduction in the cross sectional area of the bore by the taper of the inner wall 15 maintains the feed as a homogeneous mass and reduces the turbulence or disintegration of the same into separate portions. Thus through out the length of the nozzle a uniform sheet of the feed may be peeled off by the vane 13 and atomized to form droplets. It is known in the art to form the vane surfaces so as to produce a spray included angle of forty-five to ninety degrees and any intermediate angle.

The terminating spiral surface 19 is a complete turn between the edge 20 and the surface 21 so that the feed, reaching the end of the nozzle, forms a complete finite conical sheet to eliminate any breaks in the spray. The reduction of the conical shape of the wall 25 reduces the width of the surfaces 18, 19 and thereby reduces the metal to liquid contact and the frictional losses of the emission of the liquid from the nozzle. This reduction in the outside diameter increases the atomization of the liquid and increases the efficiency of the nozzle.

Figure 5 is a cross section view of a slot of the vane. In addition to the members herein described are flow stream lines 100 inside the helix. As the flowing liquid feed encounters the inner helical edge 31, a sheet of the feed 101 is sheared off and breaks into droplets of average diameter 350 microns or less. The droplets form a vortex 110 adjacent the slot which vortex entrains catalyst particles 230 from the fluidized bed of catalyst 225. Because of the velocity of the flowing feed, surface 18 is swept clean and neither the vortex 110 nor entrained particles contact the surface, thereby freeing it from erosion. The feed discharged from the nozzle has a major portion of the spray with an included angle of forty-five to ninety degrees. This creates a pressure profile across the slot such that the flow rate across surface 18 is relatively high while the pressure is relatively low. Likewise the flow rate across surface 28 is relatively low and the pressure correspondingly relatively high forming a relatively high pressure zone 108 (stagnant boundary layer). Accordingly, the relatively high pressure zone 108 (stagnant boundary layer) along surface 28 and surface

isolates the surfaces from the vortex 110 and the erosive particles contained therein. The phenomenon is the same along the continuous slot.

Figure 6 is a schematic view of the vane in the reaction zone of a fluid catalytic cracking process. Feed (combination of 200 and 210) is injected into the riser 250 in this example, though not critically, 15° from the riser center line. Steam 200 is mixed with oil 210 in a steam to oil volume ratio of 0 to 15 preferably 1 to 4 and combine to form feed at a bulk average exit velocity of 1 to 29 m/sec. (3.4 to 95 ft/sc), preferably 3 to 8.5 m/sec. (10 to 28 ft/sec) at exit from the nozzle 10. The vane of the nozzle 10 is positioned inside a reaction zone 220 wherein is a fluidized bed of catalyst 225, supplied with catalyst 230.

## DESCRIPTION OF THE PREFERRED EMBODIMENTS

Multiple nozzle feed injection systems improve product yields of fluid catalytic cracking processes, notably lower gas and coke yields. Improvements resulting from the use of multiple feed injectors have been attributed to improve initial mixing of the feedstock with hot regeneration catalyst. Improved mixing results in faster vaporization of feedstock in the riser and an more even distribution of the vapor over the flowing catalyst particles. These multiple nozzle systems have consisted of several open pipes injecting feedstock into the base of the riser.

The boiling range of feedstocks charged to fluid catalytic cracking units has increased over the past several years. This change along with the change of quality characteristics of feedstocks has resulted in higher coke and gas yields for a given conversion. Because of the increase in boiling range temperatures, the feedstocks are more difficult to vaporize in the riser. The need for improvement in feedstock atomization is apparent.

It has been found in accordance with the present invention that essentially complete atomization can be attained in the injection zone with only moderate bulk average exit velocities of 1 to 29 m/sec. (3.4 to 95 ft/sec.) preferably 3 to 8.5 m/sec. (10 to 28 ft/sec.). These exit velocities are attained with a liquid oil velocity of 3.3 to 98 m/sec. (11 to 322 ft/sec.) preferably 10.4 to 29 m/sec. (34 to 95 ft/sec.) inside the vane and the use of 689 to 1379 kPa gauge (100 to 200 psig) steam in steam to oil volume rate of 0 to 15, preferably 1 to 4. It is surprising that good atomization takes place at low ratios, e.g., 0 to.15 steam to oil volume ratio.

It has been found that optimal operation occurs when a major portion of the feed is sprayed into the reaction zone with an included angle of forty-five degrees to ninety degrees. It has been found by experimentation that an angle of about sixty degrees allows for the minimum size vane while producing a spray pattern which most evenly fills the reaction zone. The sixty degree angle spray was found to be critical. In standard practice, feed is injected into a riser at an inclination of fifteen degrees from the riser centerline. A sixty degree included spray angle rather than the standard ninety degrees from spray nozzles and zero degrees from open pipes was found to fill the riser uniformly with 350 micron droplets without impingement on the riser wall. Such impingement causes coking and erosion on the riser wall and is to be avoided.

Synergistically the narrow spray angle protects the lower and upper helical surface from attack by catalyst particles entrained in the vortices created just outside the helix slot. The velocity-pressure profile across the slot at 3 to 8.5 m/sec. (10 to 28 ft./sec.) discharge velocity is such that entrained particle impinge on neither surface. Nor do they impinge on the outer surface because of the extension of a relatively high pressure zone stagnant boundry layer. Therefore the vane is not cut away as has occurred in nozzles tried previously. Therefore the vane can be exposed to the catalyst bed without excessive short run wear.

Another benefit achieved by the method of the present invention is the control of feed droplet size over that achievable with open pipe injection. Because of the increase in boiling range of recently used feedstocks, they are more difficult to vaporize in the riser. The larger surface area produced by the smaller droplet size greatly increases the rate of feedstock vaporization in the riser. Also, a narrower droplet size distribution reduces maldistribution in the riser which narrows the product distribution produced in a 1-7 second riser residence time.

Droplet surface area is inversely proportional to the diameter of the droplets produced for a given volume of liquid. For example, a gallon of 100 micron droplets has 25 times the surface area of a gallon of 2500 micron droplets and 250 times the surface area of a gallon of 25,000 micron (1 inch) drops. The nozzle of the present invention produces less than 350 micron diameter droplets with a good proportion of the preferred 100 micron and smaller droplets. This is achieved without the excessive injection steam rates found in the prior art, such steam rates adversely affecting down stream operation such as hydrothermal catalyst deactivation, sour water handling, vapor overloading of the main fractionator and thermal overloading of overhead condensers. Excessive steam imparts sufficient velocity to the feed stream to cause atomization. However, these high velocities damage FCCU catalyst. As seen in the example, these high velocities are avoided by use of nozzles which instead shear the feed into sheets of uniform thickness which spontaneously break up into uniform, narrowly distributed diameter droplets.

This invention is better shown by way of example.

## EXAMPLE 1

Six helical feed nozzles were installed in the reactor zone of a fluid catalytic cracking unit. Previously no nozzles had been used. It was thought that at increased rates, atomization of 350 microns could not be achieved without a nozzle of some sort and those previously used in the art had housings too large to be installed in the reaction zone without altering catalyst flow. The nozzles had a diameter of 5 cm (2 inches) at the inlet and produced a 60° spray pattern from a helix wrapped three times around the central core. The nozzles were fabricated from Stellite for abrasion resistance.

The nozzles were designed to inject oil and 68 kg (150 lb.) saturated steam into a reaction zone. Design injection composition was 10 kg. steam/m$^3$ oil (3.5 lb. steam/bbl. oil) (volumetric steam to liquid hydrocarbon ratio of 4). The design velocity inside of the constructed cone defining the inner surface of the nozzle was 29 m/sec. (95 ft/sec.). In the design, the most constricted point of flow was the throat, passage 12 shown on figure 3. Design velocity at this point was 65 m/sec. (212 ft/sec.). Velocity at the constructed outer cone defining the exit surface of the nozzle was 8.5 m/sec. (28 ft/sec.). Design droplet size is less than 350 microns.

The fluid catalytic unit was started up on November 12, 1983 and the nozzles operated at design conditions. In August 1984, the unit was shut down for repair and inspection unrelated to the injection nozzles. Although there was some erosion on the spray nozzles, this erosion was light and had no effect on the spraying characteristics of the nozzles. The unit was re-started without repair or replacement of the nozzles.

## EXAMPLE 2

The nozzle design calculations of Example 1 were as follows:

| Steam/Oil vol/vol. | Bulk Average Exit Velocities, m/sec. (ft/sec.) | | |
|---|---|---|---|
| | at Figure 5 surface 25-25 | 15-15 | Figure 3, Passage 12 Throat |
| 0 | 1 ( 3.4) | 3.4 (11) | 7.9 ( 26 ) |
| 1 | 3 (10 ) | 10.4 (34) | 23 ( 76 ) |
| 4 | 8.5 (28 ) | 29 (95) | 65 (212 ) |
| 15 | 29 (95 ) | 98 (322) | 219 (718 ) |

The principle of the invention and the best mode contemplated for applying the principle have been described. It is to be understood that the foregoing is illustrative only and that other means and techniques can be employed without departing from the true scope of the invention defined in the following Claims.

## Claims

1. A method for protecting from erosion an exposed atomization vane of an oil/steam feed injection nozzle said vane exposed to a fluidized catalyst in the reaction zone of a fluidized catalytic cracking process, said method comprising:

a. forming the vane in an axially tapered helix with an inner longitudinal surface, an upper radially extending helical surface, a lower radially extending helical surface and an outer surface;

i. said inner longitudinal surface at an angle to the axis and tapering inward to form a tapered bore inside of said vane;

ii. said upper radially extending helical surface spaced to form in conjunction with the lower radially extending helical surface a helical slot for discharging said oil/steam feed and forming with said longitudinal surface a helical edge of progressively reduced diameter to position a portion of said upper surface radially inward from the axially preceding curved wall to peel a portion of the oil/steam feed and discharge the feed through the slot to said reaction zone;

iii. said lower radially extending helical surface formed to produce said slot substantially uniform in cross section along its length;

iv. said outer edge having a radius less than the corresponding portion of the preceding turn so that the feed discharged from the nozzle has a major portion of the spray with an included angle of forty-five to ninety degrees;

b. positioning the vane in the reaction zone;

c. discharging the oil/steam feed in a steam to oil volume ratio of 0 to 15 and velocity of 1 to 29 m/sec. (3.4 to 95 ft./sec.) thereby sweeping the upper radially extending helical surface free of erosive matter and creating a pressure profile across the slot such that the pressure of the lower radially extending surface is higher than that of upper radially extending helical surface to form a relatively stagnant layer such that erosive matter such as catalyst from the reaction zone carried in feed vortices does not impinge upon the lower radially extending surface.

2. A fluid catalytic cracking process wherein an oil/steam feed is injected into a fluidized catalyst in a reaction zone of a transfer line reactor wherein injection is by means of injection nozzle comprising an atomization vane protected from catalyst erosion by containing the vane in a housing; the process comprising:

1. positioning the nozzle comprising an unhoused atomization vane exposed to the fluidized catalyst in the reaction zone;

2. forming the vane; and discharging steam/oil feed from the vane to protect the exposed vane from catalyst erosion;

a. the vane formed in an axially tapered helix with an inner longitudinal surface, an upper radially extending helical surface, a lower radially extending helical surface and an outer surface;

i. said inner longitudinal surface at an angle to the axis and tapering inward to form a tapered bore inside of said vane,

ii. said upper radially extending helical surface spaced to form in conjunction with the lower radially extending helical surface a helical slot for discharging said oil/steam feed and forming with said longitudinal surface a helical edge of progressively reduced diameter to position a portion of said upper surface inward from the axially preceding curved wall to peel a portion of the oil/steam feed and discharge the feed through the slot to said reaction zone;

iii. said lower radially extending helical surface formed to produce said slot substantially uniform in cross section along its length;

iv. said outer edge having a radius less than the corresponding portion of the preceding turn so that the feed discharged from the nozzle has a major portion of the spray with an included angle of forty-five to ninety degrees;

b. the oil/steam feed discharged in a steam to oil volume ratio of 0 to 15 and velocity of 1.29 m/sec. (3.4 to 95 ft/sec.) thereby sweeping the upper radially extending helical surface free of erosive matter and creating a pressure profile across the slot such that the pressure of the lower radially extending surface is higher than that of upper radially extending helical surface to form a relatively stagnant layer such that erosive matter such as catalyst from the reaction zone carried in feed vortices does not impinge upon the lower radially extending surface.

3. A catalytic cracking process wherein an oil/steam feed is injected into a fluidized catalyst in a reaction zone of a transfer line reactor wherein injection is by means of one or more injectors, the injectors selected from the group consisting of injectors with nozzles and injectors without nozzles, the injectors with nozzles distinguished by producing complete atomization of desired droplet size; the nozzles comprising an atomization vane protected from catalyst erosion by a housing, nozzle size and therefore injector capacity constrained by the housing; the process comprising:

1. positioning the nozzle consisting of an unhoused atomization vane exposed to the fluidized catalyst in the reaction zone;

2. forming the vane; and discharging steam/oil feed from the vane so as to protect the exposed vane from catalyst erosion;

a. the vane formed in an axially tapered helix with an inner longitudinal surface, an upper radially extending helical surface, a lower radially extending helical surface and an outer surface;

i. said inner longitudinal surface at an angle to the axis and tapering inward to form a tapered bore inside of said vane,

ii. said upper radially extending helical surface spaced to form in conjunction with the lower radially extending helical surface a helical slot for discharging said oil/steam feed and forming with said longitudinal surface a helical edge of progressively reduced diameter to position a portion of said upper surface radially inward from the axially preceding curved wall to peel a portion of the oil/steam feed and discharge the feed through the slot to said reaction zone;

iii. said lower radially extending helical surface formed to produce said slot substantially uniform in cross section along its length;

iv. said outer edge having a radius less than the corresponding portion of the preceding turn so that the feed discharged from the nozzle has a major portion of the spray with an included angle of forty-five to ninety degrees;

b. the oil/steam feed discharged from the vane in a steam to oil volume ratio of 0 to 15 and velocity of 1 to 29 m/sec. (3.4 to 95 ft/sec.) thereby sweeping the upper radially extending helical surface free of erosive matter and creating a pressure profile across the slot such that the pressure of the lower radially extending surface is higher than that of upper radially extending helical surface to form a relatively stagnant layer such that the erosive matter such as catalyst from the reaction zone carried in feed vortices does not impinge upon the lower radially extending surface thereby eliminating the housing and the associated capacity constraint while producing complete atomization of desired droplet size.

4. A method according to any of Claims 1 -3 wherein in (a) (iv) the included angle is about sixty degrees.

5. A method according to any of Claims 1 -4 wherein the aforesaid steam to oil volume ratio is 1 to 4 and the aforesaid discharge velocity is 3 to 8.5 m/sec. (10 to 28 ft/sec.).

6. A method according to any of Claims 1 to 5 wherein said inner surface is longitudinally curved and said tapered bore is curved.

7. A method according to any of Claims 1 to 5 wherein said inner surface is longitudinally straight and said tapered bore is conical.

FIG.1.

FIG.2.

FIG.3.

FIG.4.

FIG.6.

FIG.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | US-A-2 804 341 (BETE) <br> * Whole document; figures 1-8 * | 1-3,6 | C 10 G 11/18 <br> B 01 J 8/24 |
| Y | FR-A-1 235 371 (ESSO) <br> * Claims A,B * | 1,5 | |
| D,A | US-A-3 654 140 (GRIFFEL et al.) <br> * Claim 1 * | 1 | |

TECHNICAL FIELDS
SEARCHED (Int. Cl.4)

C 10 G
B 01 J

The present search report has been drawn up for all claims

| Place of search | Date of completion of the search | Examiner |
|---|---|---|
| THE HAGUE | 03-07-1986 | DE HERDT O.C.E. |